# EUROPÄISCHE PATENTSCHRIFT

(11) **EP 2 938 523 B1**
(45) Veröffentlichungstag und Bekanntmachung des Hinweises auf die Patenterteilung: **17.02.2021**
(21) Anmeldenummer: 13802647.1
(22) Anmeldetag: 11.12.2013
(51) Int. Cl.: B60S 1/52

(54) **WISCHARMVORRICHTUNG**
WIPER ARM DEVICE
DISPOSITIF DE BRAS D'ESSUIE-GLACE

(30) Priorität: 28.12.2012 DE 102012224474
(43) Veröffentlichungstag der Anmeldung: 04.11.2015
(73) Patentinhaber: Robert Bosch GmbH, 70442 Stuttgart (DE)
(72) Erfinder: BERNHARD, Manfred, 77815 Buehl (DE)
(86) Internationale Anmeldenummer: PCT/EP2013/076175
(87) Internationale Veröffentlichungsnummer: WO 2014/102062

(56) Entgegenhaltungen:
- EP-A1- 0 845 395
- EP-A1- 1 985 513
- WO-A1-02/02378
- DE-A1-102005 060 617
- KR-B1- 100 657 188
- US-A1- 2003 009 841
- US-B1- 6 286 174

## Beschreibung

### Stand der Technik

Es ist bereits eine Wischarmvorrichtung mit einer Wischarmeinheit und einer Düseneinheit, die dazu vorgesehen ist, Waschwasser auf eine Fahrzeugscheibe aufzutragen, vorgeschlagen worden.
Aus der EP 1 985 213 A1 ist eine Wischarmvorrichtung mit den Merkmalen des Oberbegriffs des Anspruchs 1 bekannt. Weiters sind in diesem Zusammenhang die DE 10 2005 060 617 A1 sowie die US 2003/009,841 A1 bekannt geworden

### Offenbarung der Erfindung

Die Erfindung geht aus von einer Wischarmvorrichtung mit einer Wischarmeinheit und einer Düseneinheit, die dazu vorgesehen ist, Waschwasser auf eine Fahrzeugscheibe aufzutragen.

Es wird vorgeschlagen, dass die Düseneinheit mit der Wischarmeinheit in einem Wischarmadapterbereich verbunden ist, wodurch Waschwasser mit geringem konstruktiven Aufwand über einen großen Bereich der Fahrzeugscheibe aufgetragen werden kann. Unter einer "Wischarmeinheit" soll in diesem Zusammenhang insbesondere eine Einheit verstanden werden, die einen Wischarm und/oder einen Wischarmadapter aufweist. Unter einer "Düseneinheit" soll in diesem Zusammenhang insbesondere eine Einheit verstanden werden, die zumindest ein Düsenelement umfasst. Unter einem "Düsenelement" soll in diesem Zusammenhang insbesondere ein Element verstanden werden, das dazu vorgesehen ist, Waschwasser auszubringen, beziehungsweise in eine bestimmte Richtung zu sprühen. Insbesondere weist das Düsenelement zumindest eine Düsenöffnung auf, die ein Waschwassersystem zu einer Umgebung hin öffnet. Das Düsenelement kann aus einem Metall und/oder besonders vorteilhaft aus einem Kunststoff hergestellt sein. Unter einem "Wischarmadapterbereich" soll in diesem Zusammenhang insbesondere ein Bereich um einen Wischarmadapter verstanden werden. Bevorzugt erstreckt sich der Wischarmadapterbereich um ein freies Ende der Wischarmeinheit, welches von einem Antriebswellenanschluss und/oder Drehzentrum abgewandt ist. Insbesondere erstreckt sich der Wischarmadapterbereich innerhalb eines Bereichs mit einem Abstand von dem Wischarmadapter und/oder dem freien Ende des Wischarms von weniger als 25 cm, bevorzugt weniger als 16 cm. Unter einem "Antriebswellenanschluss" soll in diesem Zusammenhang insbesondere ein Anschlussteil der Wischarmeinheit verstanden werden, das dazu vorgesehen ist, an einer von einem Motor angetriebenen Antriebswelle angeschlossen und in einem Wischvorgang um ein Drehzentrum geschwenkt zu werden. Insbesondere ist die Düseneinheit mit der Wischarmeinheit in dem Wischarmadapterbereich direkt verbunden. Unter "direkt verbunden" soll in diesem Zusammenhang insbesondere in direkter Anlage verstanden werden. Unter einem "Wischarmadapter" soll in diesem Zusammenhang insbesondere ein Adapter verstanden werden, der einen Kontaktbereich zu einem Wischarmbauteil aufweist und dazu vorgesehen ist, einen Kopplungsbereich des Wischarmbauteils für eine Kopplung und/oder Kontaktierung mit einem Wischblattadapter bereitzustellen. Bevorzugt ist das Wischarmbauteil an dem Wischarm befestigbar oder einstückig mit dem Wischarm ausgebildet. Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit dem Wischarmadapter bereitzustellen. Unter "Waschwasser" soll in diesem Zusammenhang insbesondere eine zum Waschen und/oder Reinigen einer Fahrzeugscheibe geeignete Flüssigkeit verstanden werden, wie insbesondere Wasser, Alkohole oder Gemische, die einen Wasseranteil, Frostschutzanteil und/oder Alkoholanteil aufweisen. Unter "vorgesehen" soll insbesondere speziell ausgebildet, ausgelegt und/oder ausgestattet verstanden werden.

In der Erfindung ist die Düseneinheit mit der Wischarmeinheit durch eine Rastverbindung verbunden, wodurch ein einfaches nachträgliches Montieren und/oder Austauschen der Düseneinheit erreicht werden kann. Unter einer "Rastverbindung" soll in diesem Zusammenhang insbesondere eine Verbindung verstanden werden, bei welcher zumindest ein Rastmittel in zumindest eine Rastausnehmung eingreift. Unter einem "Rastmittel" soll in diesem Zusammenhang insbesondere ein federelastisches Element zur Herstellung einer Rastverbindung verstanden werden, das dazu vorgesehen ist, bei einer Montage elastisch ausgelenkt zu werden.

Des Weiteren ist in der Erfindung den Wischarmadapter an die Düseneinheit durch eine Rastverbindung verbunden, wodurch eine schnelle und stabile Montage der Düseneinheit am Wischarmadapter erreicht werden kann.

Vorteilhaft umfasst der Wischarmadapter zumindest eine Rastausnehmung, die dazu vorgesehen ist, zumindest ein Rastmittel der Düseneinheit aufzunehmen, wodurch eine stabile Verbindung zwischen dem Wischarmadapter und der Düseneinheit hergestellt werden kann.

Ist die zumindest eine Rastausnehmung in zumindest einer Seitenflanke des Wischarmadapters angeordnet, kann eine Rastverbindung besonders schnell hergestellt werden. Unter einer "Seitenflanke" soll in diesem Zusammenhang insbesondere eine Seitenwandung beziehungsweise eine Schürze eines Wischarmadapters verstanden werden, die von einer Deckseite des Wischarmadapters zumindest im Wesentlichen orthogonal abgewinkelt ist. Insbesondere bilden zwei gegenüberliegende Seitenflanken und die Deckseite ein im Wesentlichen U-förmiges Profil.

Ein besonders hoher Schutz vor Beschädigungen der Düseneinheit in einem Betrieb wird erreicht, weil der Wischarmadapter einen Aufnahmeraum aufweist, der dazu vorgesehen ist, die Düseneinheit zumindest teilweise aufzunehmen. Unter einem "Aufnahmeraum" soll in diesem Zusammenhang insbesondere ein Raum verstanden werden, der von der zumindest einen Seitenflanke begrenzt ist. Bevorzugt ist der Aufnahmeraum von zumindest zwei Seitenflanken begrenzt und direkt zwischen den zumindest zwei Seitenflanken angeordnet. Besonders bevorzugt ist der Aufnahmeraum von einer Deckseite des Wischarmadapters begrenzt.

In einer weiteren Ausgestaltung der Erfindung wird vorgeschlagen, dass die Wischarmeinheit einen Wischarm umfasst, an welchem die Düseneinheit durch eine Rastverbindung verbunden ist.

Des Weiteren wird vorgeschlagen, dass die Düseneinheit zumindest teilweise an einem Wischarmadapter anliegt, wodurch besonders vorteilhaft eine kompakte und stabile Ausbildung der Erfindung erzielt werden kann. Unter "anliegen" soll in diesem Zusammenhang insbesondere direkt in Kontakt, vorteilhaft flächig in Kontakt, stehen verstanden werden.

Eine besonders aerodynamische Ausbildung der Erfindung kann erreicht werden, wenn die Düseneinheit zumindest im Wesentlichen eine gleiche Breite aufweist wie ein Wischarmadapter. Unter "zumindest im Wesentlichen" soll in diesem Zusammenhang insbesondere eine Abweichung von weniger als 20 %, bevorzugt von weniger als 10 %, besonders bevorzugt von weniger als 5 %, ganz besonders bevorzugt von weniger als 1 % verstanden werden. Zusätzlicher konstruktiver Aufwand kann ferner vermieden werden, wenn der Wischarmadapter von einem Top-Lock-Wischarmadapter gebildet ist.

Ist die Düseneinheit dazu vorgesehen, Waschwasser beidseitig von dem Wischarm auf die Fahrzeugscheibe aufzutragen, kann vorteilhaft ein besonders großer Bereich der Fahrzeugscheibe bei geringem Waschwasserverbrauch mit Waschwasser benetzt werden. Unter "beidseitig von dem Wischarm" soll in diesem Zusammenhang insbesondere auf zwei am Wischarm angrenzenden Seiten, die sich gegenüberliegen beziehungsweise von dem Wischarm getrennt sind, verstanden werden. Insbesondere erstreckt sich eine Trennlinie zwischen den beiden Seiten entlang einer Längserstreckung des Wischarms. Unter einer "Längserstreckung" soll in diesem Zusammenhang insbesondere eine größtmögliche Erstreckung verstanden werden. Unter einer "Erstreckung" eines Elements soll in diesem Zusammenhang insbesondere ein maximaler Abstand zweier Punkte einer senkrechten Projektion des Elements auf eine Ebene verstanden werden.

Die erfindungsgemäße Wischarmvorrichtung soll hierbei nicht auf die oben beschriebene Anwendung und Ausführungsform beschränkt sein. Insbesondere kann die erfindungsgemäße Wischarmvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Wischarmvorrichtung in einer perspektivischen Ansicht,
- Fig. 2: eine Düseneinheit der Wischarmvorrichtung nach Figur 1 in einer perspektivischen Ansicht und
- Fig. 3: ein weiteres Ausführungsbeispiel einer erfindungsgemäßen Wischarmvorrichtung mit einem Wischblatt in einer Draufsicht.

### Beschreibung der Ausführungsbeispiele

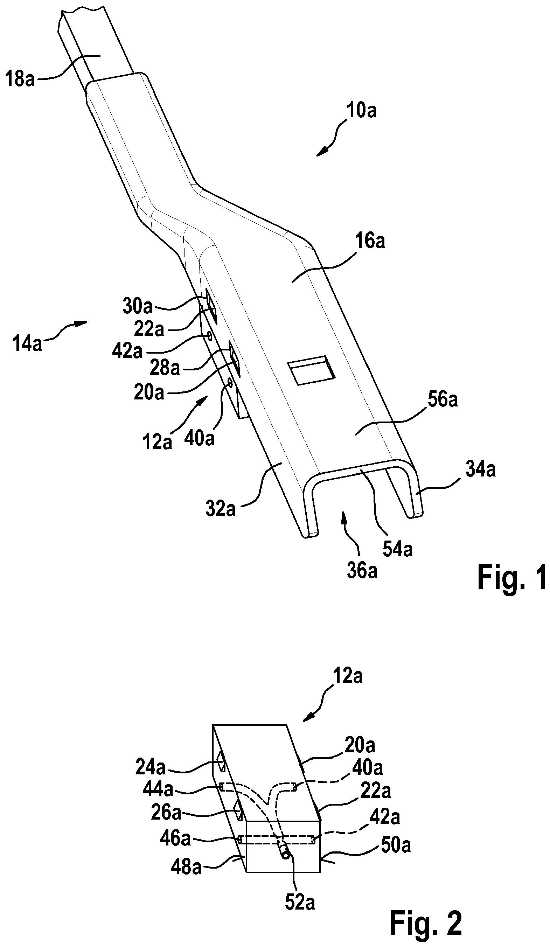

In der Figur 1 ist ein erstes Ausführungsbeispiel einer erfindungsgemäßen Wischarmvorrichtung mit einer Wischarmeinheit 10a und einer Düseneinheit 12a gezeigt. Die Düseneinheit 12a ist dazu vorgesehen, Waschwasser auf eine nicht dargestellte Fahrzeugscheibe aufzutragen. Die Fahrzeugscheibe kann dabei eine Front- oder Heckscheibe eines Fahrzeugs, wie insbesondere eines Kraftfahrzeugs bilden.

Die Düseneinheit 12a ist mit der Wischarmeinheit 10a in einem Wischarmadapterbereich 14a direkt verbunden. Die Wischarmeinheit 10a weist einen Wischarm 18a und einen Wischarmadapter 16a auf. Die Düseneinheit 12a ist im gezeigten Ausführungsbeispiel mit dem Wischarmadapter 16a verbunden. Der Wischarmadapter 16a ist von einem Top-Lock-Wischarmadapter gebildet. Der Wischarmadapterbereich 14a erstreckt sich um ein freies Ende 54a der Wischarmeinheit 10a. Das freie Ende 54a ist entgegengesetzt zu einem nicht näher dargestellten Ende, an welchem ein Antriebswellenanschluss angeordnet ist. Über den Antriebswellenanschluss ist die Wischarmeinheit 10a an einer nicht dargestellten Antriebswelle angeschlossen. Der Wischarmadapterbereich 14a erstreckt sich innerhalb eines Bereichs mit einem Abstand von dem freien Ende 54a der Wischarmeinheit 10a von weniger als 16 cm. Der Wischarmadapter 16a ist mit dem Wischarm 18a verkrimpt. Es ist in diesem Zusammenhang jedoch auch denkbar, dass der Wischarmadapter 16a mit dem Wischarm 18a verschweißt und/oder verklebt ist. Ferner ist es denkbar, dass der Wischarmadapter 16a und der Wischarm 18a von einem einzigen Bauteil gebildet sind beziehungsweise einstückig miteinander ausgebildet sind. Der Wischarmadapter 16a bildet einen Kontaktbereich zu einem nicht gezeigten Wischblattadapter, der an einem Wischblatt angeordnet ist.

In der Figur 2 ist die Düseneinheit 12a aus Gründen der Übersichtlichkeit ohne den Wischarmadapter 16a gezeigt. Die Düseneinheit 12a umfasst genau ein Düsenelement 38a. Es ist in diesem Zusammenhang auch denkbar, dass die Düseneinheit 12a mehrere Düsenelemente umfasst, die getrennt voneinander ausgebildet sind.

Das Düsenelement 38a bringt in einem Betriebszustand Waschwasser in eine bestimmte Richtung aus. Dazu weist das Düsenelement 38a eine erste Düsenöffnung 40a, eine zweite Düsenöffnung 42a, eine dritte Düsenöffnung 44a und eine vierte Düsenöffnung 46a auf. Die erste Düsenöffnung 40a und die zweite Düsenöffnung 42a sind auf einer ersten Seite 48a des Düsenelements 38a angeordnet. Die dritte Düsenöffnung 44a und die vierte Düsenöffnung 46a sind auf einer zweiten Seite 50a des Düsenelements 38a angeordnet. Die erste Seite 48a und die zweite Seite 50a verlaufen parallel zueinander und sind voneinander abgewandt. Dadurch ist die Düseneinheit 12a dazu vorgesehen, das Waschwasser beidseitig von dem Wischarm 18a auf die Fahrzeugscheibe aufzutragen.

Die erste Düsenöffnung 40a, die zweite Düsenöffnung 42a, die dritte Düsenöffnung 44a und die vierte Düsenöffnung 46a führen zu einem Waschwasserschlauchanschluss 52a und öffnen ein Waschwassersystem zu einer Umgebung hin. Das Düsenelement 38a ist aus einem Kunststoff in einem Spritzgussverfahren hergestellt.

Die Düseneinheit 12a ist mit der Wischarmeinheit 10a durch eine Rastverbindung verbunden. Genauer gesagt ist die Düseneinheit 12a durch die Rastverbindung mit dem Wischarmadapter 16a verbunden. Dazu umfasst der Wischarmadapter 16a, wie in der Figur 1 gezeigt, vier Rastausnehmungen 28a, 30a von denen lediglich zwei dargestellt sind. Die Düseneinheit 12a weist vier Rastmittel 20a, 22a, 24a, 26a auf. Die Rastausnehmungen 28a, 30a sind dazu vorgesehen, die Rastmittel 20a, 22a, 24a, 26a der Düseneinheit 12a aufzunehmen.

Die Rastausnehmungen 28a, 30a sind in Seitenflanken 32a, 34a des Wischarmadapters 16a angeordnet. Die Seitenflanken 32a, 34a bilden Seitenwandungen des Wischarmadapters 16a. Die Seitenflanken 32a, 34a sind senkrecht an einer Deckseite 56a des Wischarmadapters 16a angeordnet. Die Seitenflanken 32a, 34a bilden mit der Deckseite 56a ein U-förmiges Profil. Innerhalb des U-förmigen Profils weist der Wischarmadapter 16a einen Aufnahmeraum 36a auf. Der Aufnahmeraum 36a nimmt die Düseneinheit 12a im Betriebszustand teilweise auf. Der Aufnahmeraum 36a ist von den Seitenflanken 32a, 34a und der Deckseite 56a begrenzt.

In dem in Figur 1 gezeigten montierten Zustand sind die Rastmittel 20a, 22a, 24a, 26a in den Rastausnehmungen 28a, 30a verrastet. Es ist in diesem Zusammenhang auch denkbar, dass in der Düseneinheit 12a Rastausnehmungen und an der Wischarmeinheit 10a Rastmittel angeordnet sind. Die Rastmittel 20a, 22a, 24a, 26a sind federelastisch ausgebildet. Im gezeigten Ausführungsbeispiel ist eine Elastizität von dem Kunststoff bereitgestellt. Es ist in diesem Zusammenhang ebenfalls denkbar, dass die Rastmittel 20a, 22a, 24a, 26a von länglichen oder plattenförmigen Rastnasen gebildet sind.

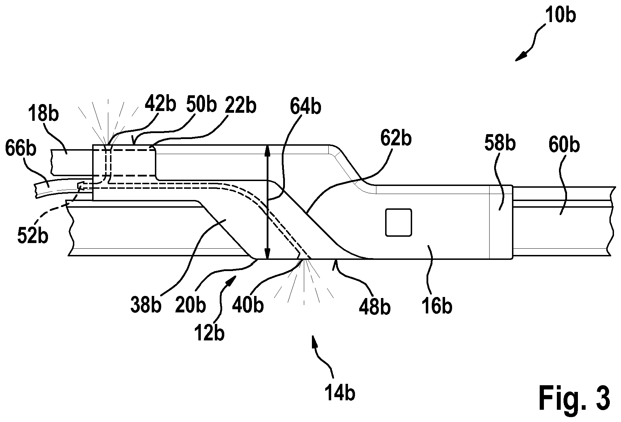

In der Figur 3 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In dem Ausführungsbeispiel der Figur 3 ist der Buchstabe a durch den Buchstaben b ersetzt.

In der Figur 3 ist eine erfindungsgemäße Wischarmvorrichtung mit einer Wischarmeinheit 10b und einer Düseneinheit 12b gezeigt. Die Düseneinheit 12b ist dazu vorgesehen, Waschwasser auf eine nicht dargestellte Fahrzeugscheibe aufzutragen.

Die Düseneinheit 12b ist mit der Wischarmeinheit 10b in einem Wischarmadapterbereich 14b direkt verbunden. Die Wischarmeinheit 10b umfasst einen Wischarm 18b und einen Wischarmadapter 16b. Die Düseneinheit 12b ist im gezeigten Ausführungsbeispiel mit dem Wischarm 18b verbunden. Am Wischarmadapter 16b ist ein Wischblattadapter 58b eines Wischblatts 60b lösbar befestigt. Der Wischarmadapter 16b ist von einem Top-Lock-Wischarmadapter gebildet. Es ist in diesem Zusammenhang prinzipiell auch denkbar, dass der Wischarmadapter 16b von einem anderen Wischarmadaptertyp gebildet ist, wie insbesondere von einem Side-Lock-Wischarmadapter. Die Düseneinheit 12b umfasst genau ein Düsenelement 38b.

Das Düsenelement 38b bringt in einem Betriebszustand Waschwasser in eine bestimmte Richtung aus. Dazu weist das Düsenelement 38b eine erste Düsenöffnung 40b und eine zweite Düsenöffnung 42b auf. Die erste Düsenöffnung 40b ist auf einer ersten Seite 48b des Düsenelements 38b angeordnet. Die zweite Düsenöffnung 42b ist auf einer zweiten Seite 50b des Düsenelements 38b angeordnet.

Die erste Seite 48b und die zweite Seite 50b verlaufen parallel zueinander und sind voneinander abgewandt. Dadurch ist die Düseneinheit 12b dazu vorgesehen, das Waschwasser beidseitig von dem Wischarm 18b auf die Fahrzeugscheibe aufzutragen. Die erste Düsenöffnung 40b und die zweite Düsenöffnung 42b führen zu einem Waschwasserschlauchanschluss 52b und öffnen ein Waschwassersystem zu einer Umgebung hin. Das Düsenelement 38b ist aus einem Kunststoff in einem Spritzgussverfahren hergestellt. Am Waschwasserschlauchanschluss 52b ist ein Waschwasserschlauch 66b aufgesteckt, der zu einer nicht dargestellten Waschwasserpumpe führt. Der Waschwasserschlauch 66b ist elastisch ausgebildet. Der Waschwasserschlauch 66b leitet das Waschwasser über den Waschwasserschlauchanschluss 52b zu den Düsenöffnungen 40b, 42b, von wo aus das Waschwasser auf die Fahrzeugscheibe gesprüht wird.

Die Düseneinheit 12b ist mit der Wischarmeinheit 10b durch eine Rastverbindung verbunden. Genauer gesagt ist die Düseneinheit 12b durch die Rastverbindung mit dem Wischarm 18b verbunden. Dazu umgreift die Düseneinheit 12b den Wischarm 18b mit Rastmitteln 20b, 22b. Die Rastmittel 20b, 22b sind federelastisch ausgebildet. Es ist in diesem Zusammenhang auch denkbar, dass die Düseneinheit 12b kraftschlüssig und/oder stoffschlüssig, beispielsweise durch eine Klebeverbindung mit dem Wischarm 18b verbunden ist.

Die Düseneinheit 12b liegt teilweise direkt am Wischarmadapter 16b an. An einer Anlagekante 62b stehen die Düseneinheit 12b und der Wischarmadapter 16b flächig in Kontakt. Ferner weist die Düseneinheit 12b eine gleiche Breite 64b auf wie der Wischarmadapter 16b. Die Breite 64b ist dabei eine maximale Erstreckung der Düseneinheit 12b beziehungsweise des Wischarmadapters 16b, die senkrecht zu einer Längserstreckung des Wischarms 18b verläuft.

## Patentansprüche

1. Wischarmvorrichtung mit einer Wischarmeinheit (10a) und einer Düseneinheit (12a), die dazu vorgesehen ist, Waschwasser auf eine Fahrzeugscheibe aufzutragen, wobei die Düseneinheit (12a) mit der Wischarmeinheit (10a) in einem Wischarmadapterbereich (14a) verbunden ist, wobei die Düseneinheit (12a) mit der Wischarmeinheit (10a) durch eine Rastverbindung verbunden ist und wobei die Wischarmeinheit (10a) einen Wischarmadapter (16a) umfasst, an welchem die Düseneinheit (12a) durch die Rastverbindung verbunden ist, **dadurch gekennzeichnet, dass** der Wischarmadapter (16a) einen Aufnahmeraum (36a) aufweist, der dazu vorgesehen ist, die Düseneinheit (12a) zumindest teilweise aufzunehmen.

2. Wischarmvorrichtung nach Anspruch 1, **dadurch gekennzeichnet, dass** der Wischarmadapter (16a) zumindest eine Rastausnehmung (28a, 30a) umfasst, die dazu vorgesehen ist, zumindest ein Rastmittel (20a, 22a, 24a, 26a) der Düseneinheit (12a) aufzunehmen.

3. Wischarmvorrichtung nach Anspruch **2, dadurch gekennzeichnet, dass** die zumindest eine Rastausnehmung (28a, 30a) in zumindest einer Seitenflanke (32a, 34a) des Wischarmadapters (16a) angeordnet ist.

4. Wischarmvorrichtung nach einem der vorhergehenden Ansprüche, **dadurch gekennzeichnet, dass** der Wischarmadapter (16a) von einem Top-Lock-Wischarmadapter gebildet ist.

5. Wischarmvorrichtung nach einem der vorhergehenden Ansprüche, **dadurch gekennzeichnet, dass** die Düseneinheit (12a) dazu vorgesehen ist, Waschwasser beidseitig von einer Längserstreckung des Wischarms (18a) ausgehend auf die Fahrzeugscheibe aufzutragen.

## Claims

1. Wiper arm apparatus having a wiper arm unit (10a) and a nozzle unit (12a) which is provided for applying washing water onto a vehicle window, wherein the nozzle unit (12a) is connected to the wiper arm unit (10a) in a wiper arm adapter region (14a), wherein the nozzle unit (12a) is connected to the wiper arm unit (10a) by a latching connection and wherein the wiper arm unit (10a) comprises a wiper arm adapter (16a) to which the nozzle unit (12a) is connected by the latching connection, **characterized in that** the wiper arm adapter (16a) has a receiving space (36a) which is provided for at least partially receiving the nozzle unit (12a).

2. Wiper arm apparatus according to Claim 1, **characterized in that** the wiper arm adapter (16a) comprises at least one latching cutout (28a, 30a) which is provided for receiving at least one latching means (20a, 22a, 24a, 26a) of the nozzle unit (12a).

3. Wiper arm apparatus according to Claim 2, **characterized in that** the at least one latching cutout (28a, 30a) is arranged in at least one side flank (32a, 34a) of the wiper arm adapter (16a).

4. Wiper arm apparatus according to one of the preceding claims, **characterized in that** the wiper arm adapter (16a) is formed by a top-lock wiper arm adapter.

5. Wiper arm apparatus according to one of the preceding claims, **characterized in that** the nozzle unit (12a) is provided for applying washing water from both sides of a longitudinal extent of the wiper arm (18a) onto the vehicle window.

## Revendications

1. Dispositif de bras d'essuie-glace comprenant une unité de bras d'essuie-glace (10a) et une unité de buse (12a) qui est prévue pour appliquer de l'eau de lavage sur une vitre de véhicule, l'unité de buse (12a) étant raccordée à l'unité de bras d'essuie-glace (10a) dans une région d'adaptateur de bras d'essuie-glace (14a), l'unité de buse (12a) étant raccordée à l'unité de bras d'essuie-glace (10a) par une connexion par encliquetage et l'unité de bras d'essuie-glace (10a) comprenant un adaptateur de bras d'essuie-glace (16a) auquel est raccordée l'unité de buse (12a) par la connexion par encliquetage, **caractérisé en ce que** l'adaptateur de bras d'essuie-glace (16a) présente un espace de réception (36a) qui est prévu pour recevoir au moins en partie l'unité de buse (12a).

2. Dispositif de bras d'essuie-glace selon la revendication 1, **caractérisé en ce que** l'adaptateur de bras d'essuie-glace (16a) comprend au moins un évidement d'encliquetage (28a, 30a) qui est prévu pour recevoir au moins un moyen d'encliquetage (20a, 22a, 24a, 26a) de l'unité de buse (12a).

3. Dispositif de bras d'essuie-glace selon la revendication 2, **caractérisé en ce que** l'au moins un évidement d'encliquetage (28a, 30a) est disposé dans au moins un flanc latéral (32a, 34a) de l'adaptateur de bras d'essuie-glace (16a).

4. Dispositif de bras d'essuie-glace selon l'une quelconque des revendications précédentes, **caractérisé en ce que** l'adaptateur de bras d'essuie-glace (16a) est formé par un adaptateur Top-Lock de bras d'essuie-glace.

5. Dispositif de bras d'essuie-glace selon l'une quelconque des revendications précédentes, **caractérisé en ce que** l'unité de buse (12a) est prévue pour appliquer de l'eau de lavage des deux côtés à partir d'une étendue longitudinale du bras d'essuie-glace (18a) sur la vitre du véhicule.
